Europäisches Patentamt

European Patent Office

Office européen des brevets

(11)   **EP 1 349 348 B1**

(19)

(12)   **EUROPÄISCHE PATENTSCHRIFT**

(45) Veröffentlichungstag und Bekanntmachung des Hinweises auf die Patenterteilung:
**05.10.2005   Patentblatt 2005/40**

(51) Int Cl.$^7$: **H04L 29/12**, H04L 12/413

(21) Anmeldenummer: **02400016.8**

(22) Anmeldetag: **20.03.2002**

(54) **Verfahren, Kommunikationseinrichtung und Kommunikationsmodul zur Ermittlung von Kommunikationsidentifizierern**

Method, communication apparatus and module for determining communication identifiers

Procédé, appareil et module de communication pour la détermination d'identificateurs de communication

(84) Benannte Vertragsstaaten:
**AT BE CH CY DE DK ES FI FR GB GR IE IT LI LU MC NL PT SE TR**

(43) Veröffentlichungstag der Anmeldung:
**01.10.2003   Patentblatt 2003/40**

(73) Patentinhaber: **Vector Informatik GmbH**
**70499 Stuttgart (DE)**

(72) Erfinder:
• **Tischer, Mirko**
**D- 71665 Vaihingen/Enz (DE)**

• **Heinemann, Holger**
**D-70771 Leinfelden (DE)**
• **Klüser, Jürgen**
**D-72793 Pfullingen (DE)**

(74) Vertreter: **Vetter, Hans**
**Patentanwälte**
**Magenbauer, Reimold, Vetter & Abel**
**Plochinger Strasse 109**
**73730 Esslingen (DE)**

(56) Entgegenhaltungen:
**US-A- 4 638 313          US-A- 4 730 251**

EP 1 349 348 B1

**Beschreibung**

Die Erfindung betrifft ein Verfahren zur Ermittlung von Kommunikationsidentifizierern für über ein Netzwerk verbundene Kommunikationseinrichtungen sowie eine Kommunikationseinrichtung und ein Kommunikationsmodul hierfür.

Zur Kommunikation über ein Netzwerk, z.B. über einen Bus, müssen sich die über das Netzwerk miteinander verbundenen Kommunikationseinrichtungen, z.B. Bus-Teilnehmer, mittels Kommunikationsidentifizierern wechselseitig identifizieren. Ein Kommunikationsidentifizierer dient z.B. als Quell- und/oder Zieladresse für auf dem Netzwerk übermittelte Nachrichten. Jeder Kommunikationseinrichtung des Netzwerks ist jeweils ein Kommunikationsidentifizierer oder sind mehrere Kommunikationsidentifizierer eindeutig zugeordnet, d.h. ein Kommunikationsidentifizierer ist im Netzwerk nur für eine einzige Kommunikationseinrichtung vorgesehen.

Für dynamisch anpassbare Netzwerke ist es nahezu unmöglich, den Kommunikationseinrichtungen bei der Herstellung bereits individuelle, eindeutige Kommunikationsidentifizierer zuzuordnen, da der Adressraum für Kommunikationsidentifizierer im Allgemeinen beschränkt ist. Beispielsweise hat ein CAN-Identifizierer (CAN = Controller Area Network) 11 oder 29 Bits.

Die Kommunikationsidentifizierer können den Kommunikationseinrichtungen beispielsweise durch einen Systemadministrator oder einen Systemintegrator zugewiesen werden. Bei CAN-Systemen ist es auch üblich, dass die Kommunikationsidentifizierer, beim CAN-Bus die sogenannten CAN-Identifizierer, durch eine Art Kompiler den Kommunikationseinrichtungen zugeordnet werden. Der Kompiler analysiert z.B. mögliche zukünftige Kommunikationsbeziehungen zwischen den Kommunikationseinrichtungen und wählt dementsprechend die Kommunikationsidentifizierer aus. Allerdings ist eine solche Lösung insbesondere für eine festgelegte Netzwerk-Konfiguration geeignet. Eine dynamische Modifikation des Netzwerks, beispielsweise durch Anbinden weiterer Kommunikationseinrichtungen, ist kaum möglich.

Bei einer in der US 4,730,251 beschriebenen Bus-Konfiguration sind an einen Input-Output-Prozessor Peripheriegeräte ankoppelbar. Jedes Peripheriegerät verfügt über einen eindeutigen Startidentifizierer. Der Input-Output-Prozessor dient als ein Bus-Master, der den Peripheriegeräten Adressen als Kommunikationsidentifizierer dynamisch zuweist. Die Peripheriegeräte bewerben sich um die Zuweisung einer Adresse. Dazu legt der Input-Output-Prozessor in einem Vergabezyklus an parallele Busleitungen sequentiell Vorgabewerte an. Die Peripheriegeräte prüfen bitweise, ob ihr jeweiliger Startidentifizierer an der durch den Input-Output-Prozessor adressierten BitPosition mit dem Vorgabewert übereinstimmt. Ist dies nicht der Fall, scheidet das jeweilige Peripheriegerät aus dem aktuellen Vergabezyklus aus. Dem letzten im Vergabezyklus verbleibenden Peripheriegerät weist der Input-Output-Prozessor einen Kommunikationsidentifizierer zu.

Zwar ermöglicht dieses Verfahren eine dynamische Adresszuweisung. Allerdings ist das Verfahren nur für eine Master-Slave-Buskongfiguration geeignet, bei der ein Master, im konkreten Fall der Input-Output-Prozessor, erforderlich ist.

Es ist daher die Aufgabe der Erfindung, eine dynamische Ermittlung von Kommunikationsidentifizierern zu ermöglichen, die auch bei einem dezentralen Netzwerk anwendbar ist.

Diese Aufgabe wird durch ein Verfahren zur Ermittlung von Kommunikationsidentifizierern für über ein Netzwerk verbundene Kommunikationseinrichtungen gelöst, denen Startidentifizierer zugeordnet sind, wobei bei dem Verfahren jede Kommunikationseinrichtung synchronisiert mit den jeweils anderen Kommunikationseinrichtungen die folgenden Schritte ausführt:

    a) Ermitteln eines ersten eigenen Entscheidungswerts anhand des der Kommunikationseinrichtung jeweils zugeordneten Startidentifizierers,
    b) Versenden des eigenen Entscheidungswerts über das Netzwerk,
    c) Vergleichen des eigenen Entscheidungswerts mit empfangenen Entscheidungswerten, und
    d) Beanspruchen zumindest eines Kommunikationsidentifizierers und Übermitteln dieses mindestens einen Kommunikationsidentifizierers

über das Netzwerk, wenn beim Schritt c) kein empfangener Entscheidungswert verfügbar ist oder wenn im Schritt c) ermittelt wurde, dass nur ein Entscheidungswert empfangen wurde und dass der jeweilige eigene Entscheidungswert höherwertiger ist als dieser empfangene Entscheidungswert, wobei die jeweilige Kommunikationseinrichtung die Schritte b) und c) nicht wiederholt, wenn sie im Schritt c) ermittelt, dass ihr aktueller eigener Entscheidungswert niederwertiger ist als zumindest ein empfangener Entscheidungswert.

Die Aufgabe wird ferner durch eine Kommunikationseinrichtung sowie ein Kommunikationsmodul gemäß der technischen Lehre weiterer unabhängiger Ansprüche gelöst. Das Kommunikationsmodul ist beispielsweise auf einem Speichermittel, insbesondere einer Diskette oder CD-ROM, einer Digital Versatile Disc, einem Festplattenlaufwerk oder dergleichen, gespeichert.

Dabei ist ein Grundgedanke der Erfindung, dass die Kommunikationseinrichtungen sich sozusagen um das Recht zur Beanspruchung zumindest eines Kommunikationsidentifizierers bewerben. Im Rahmen eines Ausscheidungsprozesses, der bei einer vorteilhaften Variante der Erfindung mehrere Ausscheidungszyklen enthalten kann, bilden die Kommunikationseinrichtungen Entscheidungswerte aus ihren jeweiligen Startidentifizierern und versenden die Entscheidungswerte an die anderen mit dem Netzwerk verbundenen Kommunikationseinrichtungen. Jede Kommunikationseinrichtung vergleicht dann ihren eigenen Entscheidungswert mit dem oder den empfangenen Entscheidungswerten. Wenn der Entscheidungswert einer Kommunikationseinrichtung höherwertiger ist als alle anderen Entscheidungswerte, hat diese Kommunikationseinrichtung das Recht zur Beanspruchung zumindest eines Kommunikationsidentifizierers erlangt. Diese Kommunikationseinrichtung beansprucht dementsprechend einen oder mehrere Kommunikationsidentifizierer und teilt den oder die Kommunikationsidentifizierer den anderen Kommunikationseinrichtungen mit.

Ein Entscheidungswert "2" kann im Sinne der Erfindung "höherwertiger" sein als beispielsweise ein Entscheidungswert "1" oder umgekehrt. Niederwertiger kann ein Entscheidungswert "2A" gegenüber einem Entscheidungswert "1B" sein oder umgekehrt.

Das erfindungsgemäße Verfahren ermöglicht eine flexible und effiziente Zuordnung von Kommunikationsidentifizierern zu Kommunikationseinrichtungen.

Weitere Vorteile der Erfindung ergeben sich aus den abhängigen Ansprüchen sowie aus der Beschreibung.

Vorteilhafterweise wird als das Netzwerk ein Bussystem, insbesondere ein Controller-Area-Network-Bussystem (CAN-Bussystem), verwendet.

Zweckmäßigerweise wird das Verfahren solange wiederholt, bis jede der Kommunikationseinrichtungen zumindest einen Kommunikationsidentifizierer beansprucht hat. Dabei nimmt eine Kommunikationseinrichtung, der bereits mindestens ein Kommunikationsidentifizierer zugeordnet ist, vorzugsweise an den Wiederholungszyklen nicht teil. Die Anzahl der Wiederholungszyklen korreliert vorteilhafterweise mit der Anzahl der an dem erfindungsgemäßen Verfahren teilnehmenden Kommunikationseinrichtungen.

Die Kommunikationseinrichtungen ermitteln ihre jeweiligen Entscheidungswerte vorteilhafterweise gemäß einer vorbestimmten Regel anhand der ihnen jeweils zugeordneten Startidentifizierer. Dabei ist es prinzipiell möglich, dass der jeweilige Entscheidungswert durch den jeweiligen Startidentifizierer oder einen Teil von diesem gebildet wird. Jedenfalls ist es bevorzugt, dass die Startidentifizierer voneinander verschieden sind. Dies bewirkt, dass bei Anwendung derselben Regel durch jede der Kommunikationseinrichtungen unterschiedliche Entscheidungswerte gebildet werden. Prinzipiell wäre es aber auch möglich, unterschiedliche Entscheidungswerte aus den Startidentifizierern zu ermitteln, indem zur Bildung der Entscheidungswerte beispielsweise eine Zufallszahl mit einem Startidentifizierer kombiniert oder anhand des Startidentifizierers gebildet wird.

Wenn im Rahmen eines Ausscheidungszyklusses der höchstwertige versendete Entscheidungswert von zwei oder mehr Kommunikationseinrichtungen versandt worden ist, ist sozusagen noch kein Sieger im Wettbewerb um das Recht zur Beanspruchung eines Kommunikationsidentifizierers ermittelbar. Diese zwei oder mehr Kommunikationseinrichtungen durchlaufen dann einen weiteren Ausscheidungszyklus, bei dem sie jeweils einen neuen Entscheidungswert anhand ihres jeweiligen Startidentifizierers ermitteln und über das Netzwerk versenden. Mit anderen Worten, die Kommunikationseinrichtungen wiederholen zumindest einmal im Rahmen eines Schrittes e) die Schritte b) und c) des erfindungsgemäßen Verfahrens anhand eines weiteren von dem vorherigen Entscheidungswert zweckmäßigerweise verschiedenen eigenen Entscheidungswerts, wenn sie im Schritt c) ermittelt haben, dass der jeweilige eigene Entscheidungswert gleichwertig ist wie zumindest ein empfangener Entscheidungswert und dass kein empfangener Entscheidungswert höherwertiger ist als der eigene Entscheidungswert.

Eine Kommunikationseinrichtung scheidet vorzugsweise aus dem Verfahren aus und wiederholt die Schritte b) und c) nicht, wenn sie im Schritt c) ermittelt, dass ihr aktueller eigener Entscheidungswert niederwertiger ist als zumindest ein empfangener Entscheidungswert.

Eine besonders bevorzugte Variante der Erfindung sieht vor, dass der jeweilige erste Entscheidungswert anhand eines ersten Segmentes des jeweiligen Startidentifizierers und der jeweils mindestens eine zweite Entscheidungswert anhand mindestens eines zweiten Segmentes des jeweiligen Startidentifizierers ermittelt wird. Die Segmente sind vorzugsweise aus benachbarten Abschnitten des jeweiligen Startidentifizierers gebildet.

Beispielsweise ist eine Anzahl $i_m$ von Kommunikationseinrichtungen mit dem Netzwerk verbunden. Für jede Kommunikationseinrichtung ist ein Startidentifizierer mit einer Anzahl $n_{id}$ Bits vorgesehen. Jeder Startidentifizierer kann in $m_s$ Segmente unterteilt werden. Die Anzahl von Bits pro Segment kann dabei einen Bereich von 1 bis $n_{id}$ aufweisen. Die Segmente sind vorzugsweise gleich groß, wobei jedes Segment dann eine Länge von $k_{msg}$ Bits aufweist. Dann lässt sich folgender Zusammenhang zwischen Startidentifizierer und Anzahl von Segmenten formulieren:

$$n_{id} = m_s * k_{msg} \qquad (1)$$

Die Anzahl möglicher unterschiedlicher Entscheidungswerte korreliert vorzugsweise mit der Anzahl möglicher unterschiedlicher Segmente sowie mit der Länge eines jeweiligen segmentes. Die Entscheidungswerte können aus den Segmenten anhand einer Rechenregel ermittelt werden. Es ist jedoch bevorzugt, dass die Entscheidungswerte den Werten der Segmente entsprechen und vorzugsweise Ganzzahlen sind.

Zum individuellen Versenden jedes möglichen Entscheidungswerts ist zweckmäßigerweise jeweils eine Nachricht vorgesehen. Die Anzahl $j_{msg}$ hierfür erforderlicher Nachrichten ist:

$$j_{msg} = 2^{k_{msg}} \qquad (2)$$

Für die aus den Segmenten ermittelbaren Entscheidungswerte, bei denen es sich vorzugsweise um den Wert des jeweiligen Segmentes selbst handelt, ist zweckmäßigerweise jeweils eine vorbestimmte.Nachricht, insbesondere eine CAN-Nachricht, vorgesehen.

Vorzugsweise wird das erfindungsgemäße Verfahren in vorbestimmten Zeittakten durchgeführt. Dabei werden beispielsweise die Schritte a), b) und c) oder b), c) und e) während eines Zeittaktes durchgeführt. Eine Kommunikationseinrichtung versendet dabei in jedem Zeittakt vorzugsweise nur jeweils einen eigenen Entscheidungswert.

Ein Ausscheidungsprozess enthält vorzugsweise eine vorbestimmte Anzahl von Ausscheidungszyklen. Die Anzahl von Zeittakten eines Ausscheidungszyklusses korreliert zweckmäßigerweise mit der Anzahl der Segmente, die aus den jeweiligen Startidentifizierern gebildet werden. Für jeden Ausscheidungszyklus kann eine vorbestimmte maximale Zeitdauer festgelegt sein.

Bei einer Segmentierung der Startidentifizierer in der obengenannten Weise und bei einer Länge Z eines Zeittakts, wobei die Länge des Zeittakts für das Versenden eines Entscheidungswert vorzugsweise gleich ist wie die Länge eines Zeittakts zur Beanspruchung eines Kommunikationsidentifizierers, ergibt sich anhand der obengenannten Formeln (1) und (2) eine Dauer

$$D_{max} = (m_s + 1) * i_m * Z \qquad (3)$$

bis jede der Kommunikationseinrichtungen einen oder mehrere Kommunikationsidentifizierer beansprucht hat.

Die Kommunikationseinrichtungen führen das erfindungsgemäße Verfahren vorteilhafterweise nach dem definierten Abschluss einer Anlaufphase durch. Dabei ist es zwar möglich, dass die Kommunikationseinrichtungen beispielsweise nach Einschalten einer gemeinsamen Spannungsversorgung ein synchrones, zeitgleiches Anlaufverhalten haben, beispielsweise wenn sie identische Systemkomponenten, z.B. Speicher und Prozessoren, haben. Insbesondere bei unterschiedlichem Anlaufverhalten der Kommunikationseinrichtungen, und das ist in der Praxis ein häufiger Fall, ist es jedoch bevorzugt, dass jede Kommunikationseinrichtung den jeweils anderen Kommunikationseinrichtungen den Abschluss ihrer Anlaufphase mit einer Synchronisierungsnachricht mitteilt. Der synchrone Start des erfindungsgemäßen Verfahrens wird dann beispielsweise dadurch erzielt, dass die Kommunikationseinrichtungen nach Abschluss ihrer Anlaufphase eine vorbestimmte Wartezeit bis zur Durchführung des Schrittes a) warten, wobei sie mit der Wartezeit bei Empfang einer Synchronisierungsnachricht erneut beginnen. Wenn die letzte Kommunikationseinrichtung am Netzwerk ihre Betriebsbereitschaft erreicht hat, wird die Wartezeit von allen Kommunikationseinrichtungen bis zum Beginn des erfindungsgemäßen Verfahrens noch ein letztes Mal abgewartet.

Prinzipiell können aber auch anderen Methoden zur Anlaufsynchronisation der Kommunikationseinrichtungen angewendet werden.

Im Folgenden wir die Erfindung anhand eines Ausführungsbeispiels unter Bezugnahme auf die Zeichnung näher erläutert. Es zeigen:

Figur 1    drei über ein Netzwerk verbundene erfindungsgemäße Kommunikationseinrichtungen, die jeweils ein erfindungsgemäßes Kommunikationsmodul enthalten,

Figur 2    ein Zustands-Übergangsdiagramm eines Kommunikationsmoduls gemäß Figur 1,

Figur 3    eine Tabelle zur Veranschaulichung einer Ermittlung von Entscheidungswerten anhand von startidentifizierern, die den Kommunikationseinrichtungen gemäß Figur 1 zugeordnet sind,

Figur 4A    ein schematisch dargestellter zeitlicher Ablauf des erfindungsgemäßen Verfahrens anhand der Entscheidungswerte gemäß Figur 3,

Figur 4B    eine Variante des Ablaufs gemäß Figur 4A,

Figur 5    eine zu der Darstellung gemäß Figur 3 alternative Ermittlung von Entscheidungswerten anhand von Startidentifizierern,

Figur 6    ein schematisch dargestellter zeitlicher Ablauf des erfindungsgemäßen Verfahrens anhand der Entscheidungswerte gemäß Figur 5,

Figur 7    einen zeitliches Schema eines synchronisierten Anlauf von zwei Kommunikationseinrichtungen gemäß Figur 1,

Figur 8    ein Zustands-Übergangsdiagramm einer der Kommunikationseinrichtungen gemäß Figur 1 während eines synchronisierten Anlaufes gemäß Figur 7, und

Figur 9    ein schematisches Flussdiagramm, das eine Funktionsweise eines Kommunikationsmoduls gemäß Figur 1 veranschaulicht.

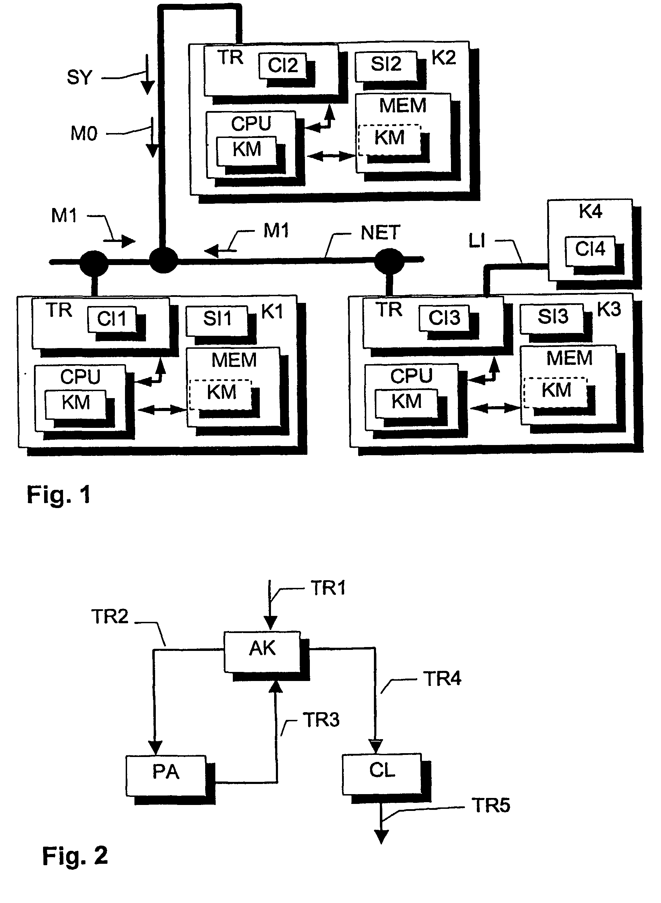

Figur 1 zeigt über ein Netzwerk NET verbundene Kommunikationseinrichtungen K1, K2, K3 und K4, bei denen es sich beispielsweise um Aktoren und Sensoren eines Steuerungssystems, z.B. in einem Automobil oder einem Schließsystem oder dergleichen handeln kann. Die Kommunikationseinrichtung K4 ist nur mittelbar, nämlich über die Kommunikationseinrichtung K3 mit dem Netzwerk NET verbunden. Bei dem Netzwerk NET handelt es sich z.B. um einen Bus, insbesondere einen CAN-Bus. Den Kommunikationseinrichtungen K1, K2 und K3 sind Startidentifizierer SI1, SI2 und SI3 zugeordnet, die vorliegend voneinander verschieden sind. Bei den Startidentifizierern SI1, SI2 und SI3 handelt es sich beispielsweise um Seriennummern der Kommunikationseinrichtungen K1 - K3.

Die Kommunikationseinrichtungen K1, K2 und K3, die man auch als "Electronic Control Units" (ECU) bezeichnen kann, sind in Figur 1 nur schematisch dargestellt. Sie weisen Steuermittel CPU, Speichermittel MEM und Verbindungsmittel TR auf. Bei dem Verbindungsmittel TR handelt es sich beispielsweise um einen CAN-Bus-Treiberbaustein oder ein sonstiges Schnittstellenmodul. Das Steuermittel CPU ist beispielsweise ein Prozessor, mit dem Programm-Code ausgeführt werden kann, der in den Speichermitteln MEM gespeichert ist. Das Steuermittel CPU führt beispielsweise den Programm-Code eines erfindungsgemäßen Kommunikationsmoduls KM aus, das vom Steuermittel CPU aus den Speichermitteln MEM geladen werden kann. Bei den Speichermitteln MEM handelt es sich beispielsweise um Festplatten, RAM-Bausteine (RAM = Random Access Memory) oder sogenannte Flash-ROM-Module (ROM = Read Only Memory). Mit Hilfe der Verbindungsmittel TR können die Kommunikationseinrichtungen K1 - K3 Nachrichten, z.B. CAN-Nachrichten, über das Netzwerk NET senden und empfangen.

Zur wechselseitigen Adressierung derartiger Nachrichten benötigen die Kommunikationseinrichtungen K1, K2, K3, K4 Kommunikationsidentifizierer CI1, CI2, CI3 und CI4, die jedoch beim jeweiligen Systemstart der Kommunikationseinrichtungen K1 - K3 noch nicht zur Verfügung stehen. Nachfolgend wird beschrieben, wie die Kommunikationseinrichtungen K1 - K3 die Kommunikationsidentifizierer CI1, CI2, CI3 und CI4 nach einem gemeinsamen Systemstart ermitteln.

Der individuelle Systemstart der Kommunikationseinrichtungen K1 - K3 kann jeweils unterschiedlich lange dauern, beispielsweise weil die Steuermittel CPU der Kommunikationseinrichtung K1 weniger leistungsfähig sind wie die Steuermittel CPU der Kommunikationseinrichtung K2. Bevor die Kommunikationseinrichtungen K1 - K3 die Kommunikationsidentifizierer CI1, CI2, CI3 und CI4 kooperativ ermitteln, müssen sie alle betriebsbereit sein. Daher stellen die Kommunikationseinrichtungen K1 - K3 zunächst wechselseitig einen definierten Abschluss ihrer Anlaufphase fest; sie synchronisieren ihren Betriebsanlauf.

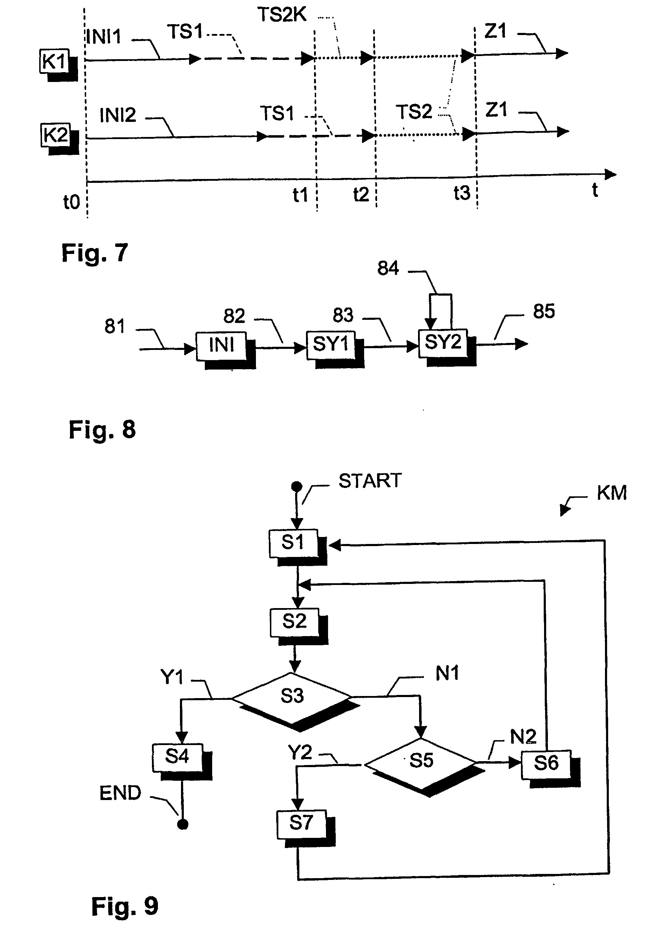

Ein Beispiel eines synchronisierten Anlaufs wird für die Kommunikationseinrichtungen K1 und K2 anhand Figur 7 erläutert. Die Anlaufsynchronisation der Kommunikationseinrichtung K3 mit den Kommunikationseinrichtungen K1 und K2 verläuft entsprechend; sie ist nachfolgend allerdings nur teilweise erläutert.

Beispielsweise beim Einschalten einer Spannungsversorgung für das Netzwerk NET, einem netzweiten oder lokalen Reset-Befehl oder dergleichen beginnen die Kommunikationseinrichtungen K1 und K2 zu einem Zeitpunkt t0 mit einer ersten Initialisierungsphase INI1, INI2, in der beispielsweise die Speichermittel MEM initialisiert werden, das Kommunikationsmodul KM in die Steuermittel CPU geladen wird oder dergleichen. Dieser Vorgang ist allgemein für jede der Kommunikationseinrichtungen K1 - K3 durch einen Start-Übergang 81 in eine Initialisierungsphase INI in Figur 8 dargestellt.

Am Ende der Initialisierungsphasen INI1, INI2 gehen die Kommunikationseinrichtungen K1 und K2 in eine Wartephase SY1 über (Übergang 82), in der sie bereits betriebsbereit sind, dennoch aber auf empfangene Nachrichten nicht reagieren. Die Wartephase SY1 dauert eine Zeitspanne TS1, deren Dauer "0" sein kann. Mit anderen Worten: die Wartephase SY1 ist nicht unbedingt nötig. Nach der Wartephase SY1 gehen die Kommunikationseinrichtungen K1 - K3 (Übergang 83) in eine Wartephase SY2 mit einer Wartezeit TS2 über, in der sie auf Synchronisierungsnachrichten SY warten.

Beim Übergang 83 versenden die Kommunikationseinrichtungen K1 - K3 Synchronisierungsnachrichten SY. Die Kommunikationseinrichtungen K1 und K2 versenden die Synchronisierungsnachrichten SY zu Zeitpunkten t1 bzw. t2. Die Wartephase SY2 wird bei Empfang einer Synchronisierungsnachricht SY durch die Kommunikationseinrichtungen K1 - K3 jeweils neu gestartet (Übergang 84), um unterschiedlich lang dauernde Initialisierungsphasen INI zu kompensieren.

Die Initialisierungsphase INI1 der Kommunikationseinrichtung K1 ist beispielsweise kürzer als die Initialisierungsphase INI2 der Kommunikationseinrichtung K2, d.h. die Kommunikationseinrichtung 1 versendet die Synchronisierungsnachricht SY zu einem Zeitpunkt t1, bei dem die Kommunikationseinrichtung K2 noch nicht fertig initialisiert ist. Solange sich die Kommunikationseinrichtung K2 noch in der Wartezeit TS2 befindet, ist die Initialisierungsphase INI2 der Kommunikationseinrichtung K2 schließlich doch beendet. Beim Empfang der von der Kommunikationseinrichtung K2 gesendeten Synchronisierungsnachricht SY zum Zeitpunkt t2 beginnt die Kommunikationseinrichtung K1 erneut die Wartezeit TS2, die Wartephase der Kommunikationseinrichtung K1 zwischen den Zeitpunkten t1 und t2 ist mithin zu einer Zeitspanne TS2K verkürzt. Erst nach gemeinsam abgewarteten Ablauf der Wartezeit TS2 - die gegebenenfalls beim Empfang einer Synchronisierungsnachricht SY von der Kommunikationseinrichtung K3 erneut zu laufen beginnt - beginnen die Kommunikationseinrichtungen K1 und K2 zu einem Zeitpunkt t3 mit dem erfindungsgemäßen Verfahren (Übergang 85).

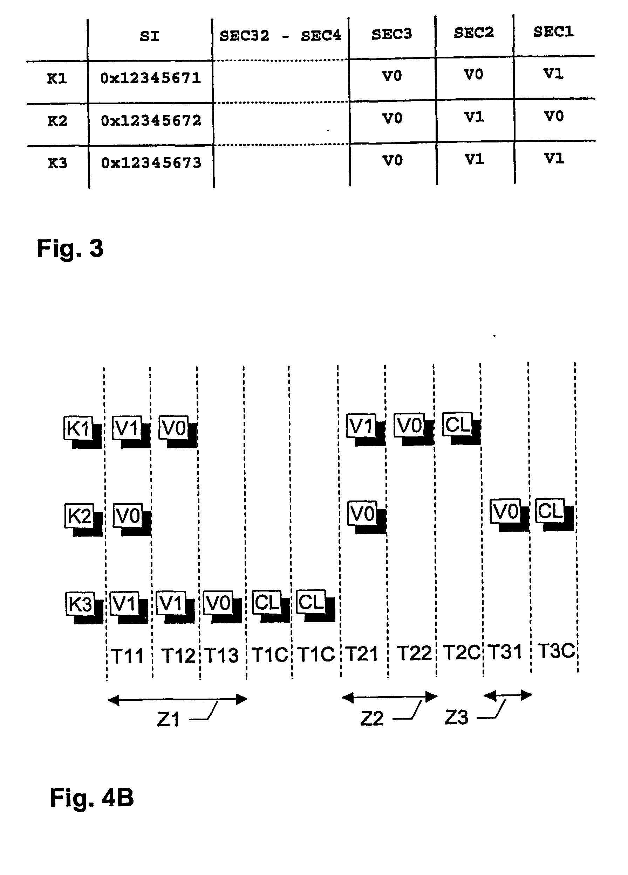

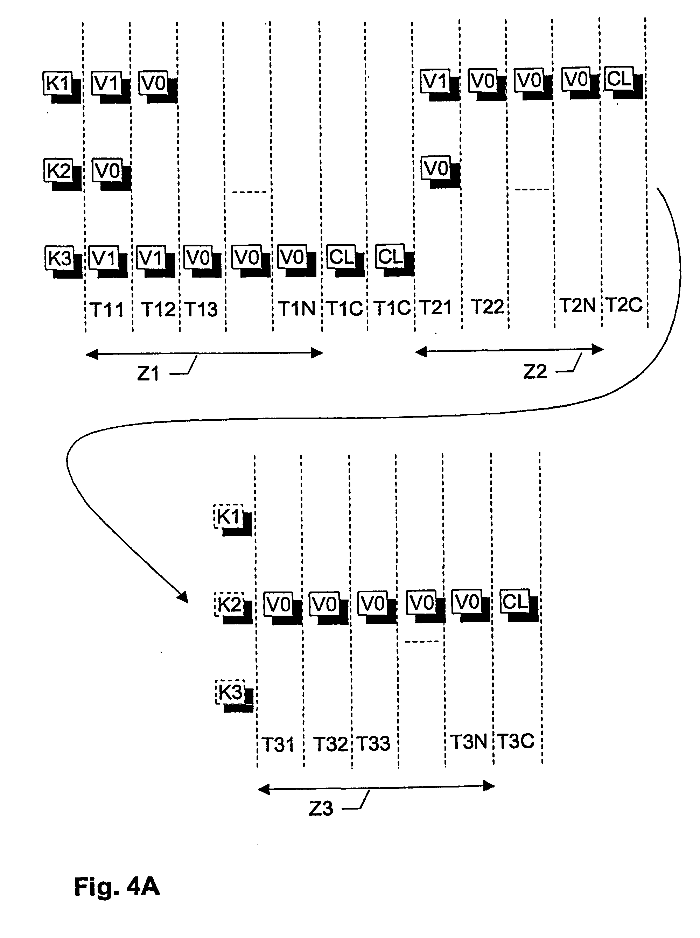

Eine beispielhafte Ermittlung der Kommunikationsidentifizierer CI1, CI2, CI3 und CI4 wird im folgenden anhand der Figuren 3 und 4 dargestellt. Den Kommunikationseinrichtungen K1 - K3 sind dabei Startidentifizierer SI1, SI2 und SI3 mit Werten 0x12345671, 0x12345672, und 0x12345673, also 32-Bit-Werte, zugeordnet. Die Startidentifizierer SI1, SI2 und SI3 sind bei dem Beispiel gemäß Figur 3 von den Kommunikationseinrichtungen K1 - K3 vorliegend in 32 Segmenten SEC1 bis SEC32 mit jeweils einem Bit zu evaluieren, wobei die Kommunikationseinrichtungen K1 - K3 Entscheidungswerte V0 oder V1 ermitteln, die im Beispiel binär "0" bzw. "1" entsprechen.

In einem ersten Zeittakt T11 eines Ausscheidungszyklusses Z1 ermitteln die Kommunikationseinrichtungen K1, K2 und K3 die dem Segment SEC1 ihrer Startidentifizierer SI1, SI2 und SI3 zugeordneten Entscheidungswerte V1, V0 bzw. V1 und versenden diese über das Netzwerk NET. Für die Entscheidungswerte V0 und V1 sind beispielsweise Nachrichten M0 und M1 vorgesehen. Dann vergleichen die Kommunikationseinrichtungen K1 - K3 die empfangenen Entscheidungswerte V0 bzw. V1 mit ihren jeweiligen eigenen Entscheidungswerten V1, V0 bzw. V1. Die Kommunikationseinrichtung K2 ermittelt dabei, dass ihr eigener Entscheidungswert V0 niederwertiger ist als die beiden empfangenen Entscheidungswerte V1. Es ist auch möglich, dass die Kommunikationseinrichtung K2 z.B. aufgrund eines zeitgleichen Sendens durch die Kommunikationseinrichtungen K1 und K3 nur einen einzigen Entscheidungswert V1 empfängt. Sie ermittelt dann ebenfalls, dass ihr eigener Entscheidungswert V0 niederwertiger ist als dieser empfangene Entscheidungswert V1. Die Kommunikationseinrichtung K2 scheidet jedenfalls aus dem Ausscheidungszyklus Z1 aus.

Die Kommunikationseinrichtungen K1 und K3 hingegen ermitteln in einem zweiten Zeittakt T12 Entscheidungswerte V0 bzw. V1 anhand eines Segments SEC2 ihrer Startidentifizierer SI1 bzw. SI3 und übermitteln sich diese wechselseitig. Die Kommunikationseinrichtung K1 ermittelt dann, dass ihr eigener Entscheidungswert V0 niederwertiger ist als der empfangene Entscheidungswert V1 und scheidet aus dem Ausscheidungszyklus Z1 aus.

Die Kommunikationseinrichtung K3 ist somit die einzige im Ausscheidungszyklus Z1 verbleibende Kommunikationseinrichtung. Sie kann, wie in Figur 4A gezeigt, in Zeittakten T12 bis T1N mit dem Versenden von Entscheidungswerten V0 und V1 für die Segmente SEC3 bis SEC32 fortfahren. Danach beansprucht die Kommunikationseinrichtung K3 in zwei Zeittakten T1C mittels Beanspruchungsnachrichten CL einen Kommunikationsidentifizierer CI3 für sich selbst und einen Kommunikationsidentifizierer CI4 für eine Kommunikationseinrichtung K4, die über die Kommunikationseinrichtung K3 mit dem Netzwerk NET verbunden ist. Die Kommunikationseinrichtung K3 übermittelt die Kommunikationsidentifizierer CI3 und CI4, bei denen es sich beispielsweise um CAN-Identifizierer handelt, den Kommunikationseinrichtungen K1 und K2 über das Netzwerk NET. Somit "wissen" diese, dass die Kommunikationsidentifizierer CI3 und CI4 bereits beansprucht sind, für eine spätere Beanspruchung also nicht mehr verfügbar sind.

Ein Vorgehen, wie in Figur 4A gezeigt, bei dem auch diejenige Kommunikationseinrichtung, die in einem Zeittakt eines Ausscheidungszyklusses keine Entscheidungswerte mehr empfängt und diesen Ausscheidungszyklus aus ihrer Sicht bereits "gewonnen" hat, für alle Segmente ihres Startidentifizierers weitere Entscheidungswerte bildet und über das Netzwerk NET versendet, ist insbesondere bei CAN-System vorteilhaft, da bei diesen eine zufällige Überlagerung gleicher Nachrichten möglich ist. Beispielsweise können, wie erläutert, zwei oder mehr Kommunikationseinrichtungen gleichzeitig gleiche Nachrichten, insbesondere Nachrichten mit gleichen Entscheidungswerten, über das Netzwerk versenden. Die eine Kommunikationseinrichtung kann dann nicht erkennen, dass die andere Kommunikationseinrichtung die gleiche Nachricht versendet hat. Durch das weitere Versenden von Entscheidungswerten - und damit potenziell mögliche Empfangen von Entscheidungswerten anderer Kommunikationseinrichtungen - wird die Wahrscheinlichkeit verringert, dass eine Kommunikationseinrichtung eine im Ausscheidungsprozess konkurrierende Kommunikationseinrichtung nicht erkennt.

Die Kommunikationseinrichtung K3 kann aber auch, wie in Figur 4B gezeigt, bereits im Zeittakt T13 feststellen, dass sie keine Entscheidungswerte mehr empfängt und daraus ableiten, dass sie den Ausscheidungszyklus Z1 "gewonnen" hat. Prinzipiell könnte die Kommunikationseinrichtung K3 dies sogar bereits im Zeittakt T12 feststellen, in dem sie nur noch einen einzigen Entscheidungswert V0 empfangen hat, der jedoch niederwertiger ist als ihr eigener Entscheidungswert V1. Jedenfalls kann die Kommunikationseinrichtung K3 nachdem sie erkannt hat, dass sie den Ausscheidungszyklus Z1 "gewonnen" hat, unmittelbar die Kommunikationsidentifizierer CI3, CI4 beanspruchen.

Nach Abschluss des Ausscheidungszyklusses Z1 beginnen die Kommunikationseinrichtungen K1 und K2 mit einem Ausscheidungszyklus Z2, an dem die bereits mit Kommunikationsidentifizierern versehene Kommunikationseinrichtung K3 nicht mehr teilnimmt. In einem ersten Zeittakt T21 ermitteln die Kommunikationseinrichtungen K1 und K2 wieder die dem Segment SEC1 ihrer Startidentifizierer SI1, SI2 zugeordneten Entscheidungswerte V1 und V0 und versenden diese über das Netzwerk NET. Die Kommunikationseinrichtung K2 ermittelt, dass ihr Entscheidungswert V0 niederwertiger ist als der empfangene Entscheidungswert V1 und scheidet aus dem Ausscheidungszyklus Z2 aus. Die Kommunikationseinrichtung K1 hingegen sendet weiterhin Entscheidungswerte V0 oder V1 in Zeittakten T22 bis T2N (siehe Figur 4A) oder ermittelt bereits im Zeittakt T22 (siehe Figur 4B), dass sie den Ausscheidungszyklus Z2 gewonnen hat. Jedenfalls beansprucht die Kommunikationseinrichtung K1 nach dem Ende des Ausscheidungszyklusses Z2 einen Kommunikationsidentifizierer CI1 und versendet diesen über das Netzwerk NET.

Am Ende eines Ausscheidungszyklusses Z3, an dem nur noch die Kommunikationseinrichtung K2 teilnimmt, beansprucht diese einen Kommunikationsidentifizierer CI2 und versendet diesen über das Netzwerk NET. Der Ausscheidungszyklus Z3 kann Zeittakte T31 bis T3N umfassen, wie in Figur 4A gezeigt, oder z. B. auch nur den Zeittakt T31, wenn die Kommunikationseinrichtung K2 nämlich im Zeittakt T31 ermittelt (Figur 4B), dass sie keine Entscheidungswerte empfängt, sie also im Ausscheidungszyklus Z3 die einzige Teilnehmerin ist und mithin keine Konkurrentin im Wettbewerb um Kommunikationsidentifizierer vorhanden ist.

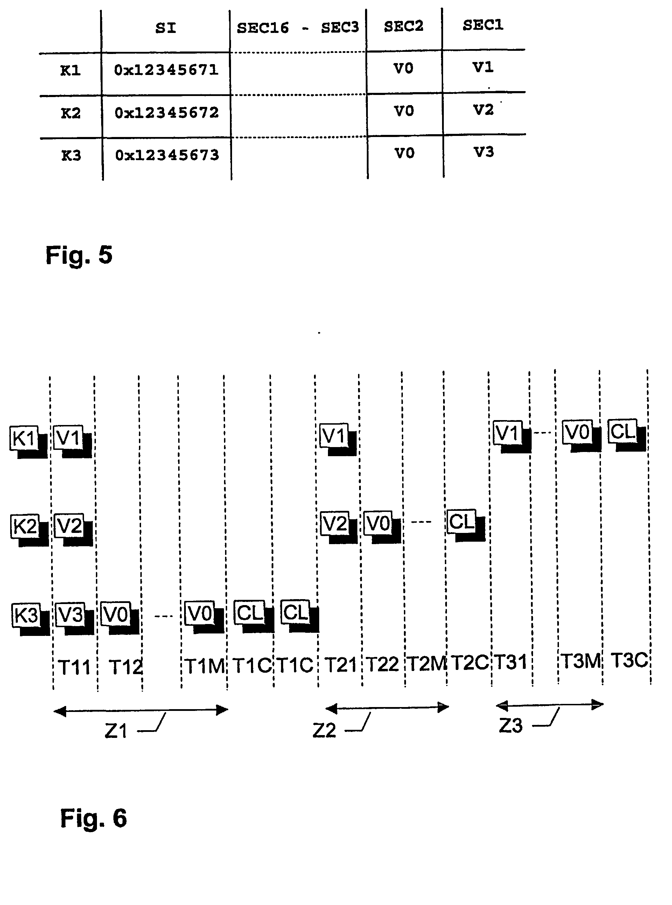

Eine Variante zu dem Beispiel gemäß Figuren 3, 4A, 4B ist in den Figuren 5 und 6 gezeigt. Die Startidentifizierer SI1, SI2 und SI3 sind dabei nicht in 32 Segmenten SEC1 bis SEC32, sondern in 16 Segmenten SEC1 bis SEC16 mit jeweils 2 Bit Länge zu evaluieren, wobei die Kommunikationseinrichtungen K1 - K3 Entscheidungswerte V0, V1, V2 oder V3 ermitteln, die beispielsweise den Zahlenwerten "0", "1", "2" bzw. "3" entsprechen. Den Entscheidungswerte V0, V1, V2 oder V3 sind Nachrichten M0 - M3 zugeordnet, die teilweise nicht dargestellt sind.

Bedingt durch die gegenüber dem Beispiel nach Figur 3 geringere Anzahl von 16 Segmenten SEC1 bis SEC16, die aus den Startidentifizierern SI1, SI2 und SI3 gebildet werden, und der dementsprechend größeren Anzahl von unterschiedlichen Entscheidungswerten V0, V1, V2 oder V3, sind die Ausscheidungsprozesse Z1 bis Z3 vergleichsweise kürzer. Dabei korreliert die maximale Anzahl von Zeittakten pro Ausscheidungszyklus Z1 bis Z3 mit der Anzahl der Segmente SEC1 bis SEC16. Die Ausscheidungsprozesse Z1 bis Z3 enthalten vorliegend jeweils maximal 16 Zeittakte T11 bis T1M, T21 bis T2M und T31 bis T3M.

Im Zeittakt T11 ermitteln und versenden die Kommunikationseinrichtungen K1 - K3 Entscheidungswerte V1, V2 und V3. Der Entscheidungswert V3 der Kommunikationseinrichtung K3 ist der hochwertigste Entscheidungswert im Zeittakt T11, so dass die Kommunikationseinrichtungen K1 und K2 aus dem Ausscheidungszyklus Z1 ausscheiden. An dessen Ende beansprucht die Kommunikationseinrichtung K3 die Kommunikationsidentifizierer CI3 und CI4. Im Ausscheidungszyklus Z2, an dem die Kommunikationseinrichtung K3 nicht teilnimmt, "gewinnt" die Kommunikationseinrichtung K2, da ihr Entscheidungswert V2 hochwertiger ist als der Entscheidungswert V1 der Kommunikationseinrichtung K1. Nach dem Ausscheidungszyklus Z2 beansprucht die Kommunikationseinrichtung K2 den Kommunikationsidentifizierer CI2. Am Ausscheidungsprozess nimmt nur noch die Kommunikationseinrichtung K1 teil, die schließlich den Kommunikationsidentifizierer CI1 beansprucht.

Es versteht sich, dass prinzipiell auch jeweils die gesamten Startidentifizierer SI1, SI2 und SI3 eine Basis zur Ermittlung von Entscheidungswerten bilden können. Dann entspricht der Wertebereich der Entscheidungswerte dem der Startidentifizierer. Die Kommunikationseinrichtungen K1 - K3 können dann auch ihre jeweiligen Startidentifizierer SI1, SI2 und SI3 als Entscheidungswerte ermitteln und versenden. Der Ausscheidungsprozess kann dann in einem einzigen Ausscheidungszyklus, ja sogar in einem einzigen Zeittakt, abgeschlossen werden.

Ein Ablaufdiagramm zur Darstellung einer beispielhaften Funktionsweise eines der erfindungsgemäßen Kommunikationsmodule KM ist in Figur 9 gezeigt. Das Kommunikationsmodul KM nimmt dabei Zustände AK, PA und CL an, die in einem Zustands-Übergangsdiagramm, einer sogenannten "(finite) state machine", gemäß Figur 2 gezeigt sind. Mit Hilfe der Kommunikationsmodule KM können die Kommunikationseinrichtungen K1 - K3 die Kommunikationsidentifizierer CI1, CI2, CI3 und CI4 ermitteln. Die Kommunikationsmodule KM steuern beispielsweise den Zugriff der Kommunikationseinrichtungen auf ihre Verbindungsmittel TR.

In einer Start-Transition TR1, die durch den Übergang 85 gemäß Figur 8 gebildet oder durch diesen ausgelöst sein kann, geht das Kommunikationsmodul KM in einen Zustand AK über, in dem es zum Senden und Empfangen von Entscheidungswerten bereit, sozusagen "aktiv", ist.

Das Kommunikationsmodul KM ist beispielsweise der Kommunikationseinrichtung K1 zugeordnet und agiert auf der Basis der Figur 3 gezeigten Variante einer Segmentbildung. Im Zustand AK ermittelt das Kommunikationsmodul KM in einem Schritt S1 einen ersten Entscheidungswert V1, den es in einem Schritt S2 den anderen Kommunikationseinrichtungen K2 und K3 übermittelt. Im Schritt 2 empfängt das Kommunikationsmodul KM der Kommunikationseinrichtung K1 zudem von den Kommunikationseinrichtungen K2 und K3 deren jeweilige Entscheidungswerte V0 und V1.

In einem anschließenden Schritt S3 überprüft das Kommunikationsmodul KM, ob der eigene Entscheidungswert V1 höherwertiger ist als alle empfangenen Entscheidungswerte V0 und V1 ("eigner Entscheidungswert > empfangene(r) Entscheidungswert(e)"). Der Entscheidungswert V0 ist zwar niederwertiger, nicht jedoch der Entscheidungswert V1. Daher geht das Kommunikationsmodul KM zu einem Schritt S5 weiter, in welchem es überprüft, ob der eigene Entscheidungswert V1 niederwertiger ist als einer der empfangenen Entscheidungswerte V0 und V1 ("eigner Entscheidungswert < empfangene(r) Entscheidungswert(e)"). Dies ist nicht der Fall, so dass das Kommunikationsmodul KM zu einem Schritt S6 weitergeht (dargestellt durch einen Pfeil N2), in welchem es für den Zeittakt T12 anhand des Segmentes SEC2 einen zweiten Entscheidungswert V0 bildet.

Anschließend geht das Kommunikationsmodul KM zum Schritt S2, dem Senden des eigenen Entscheidungswerts V0 und Empfangen des Entscheidungswerts V1 von der Kommunikationseinrichtung K3. Beim Schritt S3 ermittelt das Kommunikationsmodul KM, dass der eigene Entscheidungswert V0 nicht höherwertiger ist als der empfangene Entscheidungswert V1 und geht dementsprechend zum Schritt S5. Dort ermittelt das Kommunikationsmodul KM, dass der eigene Entscheidungswert V0 niederwertiger ist als der empfangene Entscheidungswert V1, und geht (dargestellt durch einen Pfeil Y2) zu einem Schritt S7 weiter, in dem es auf den Beginn eines neuen Ausscheidungszyklusses, vorliegend den Ausscheidungszyklus Z2, wartet.

Mit dem Übergang gemäß Pfeil Y2 geht das Kommunikationsmodul KM zudem in einen Zustand PA über, in Figur 2 durch eine Transition TR2 dargestellt. Die Transition TR2 bedeutet, dass das Kommunikationsmodul KM aus einem aktuellen Ausscheidungszyklus ausgeschieden, sozusagen von den anderen Kommunikationseinrichtungen K2 und K3 überstimmt ist. Im Zustand PA verhält sich das Kommunikationsmodul KM passiv. Es sendet keine weiteren Entscheidungswerte mehr. Es wartet, bis der aktuelle Ausscheidungszyklus beendet ist. Das Kommunikationsmodul KM ermittelt das Ende des Ausscheidungszyklusses beispielsweise dadurch, dass es eine oder mehrere Beanspruchungs-Nachrichten von einer der anderen Kommunikationseinrichtungen K2 und K3 erhält, in denen diese eine oder mehrere Kommunikationsidentifizierer beansprucht. Das Kommunikationsmodul KM ermittelt den Empfang der letzten Beanspruchungs-Nachricht beispielsweise dadurch, dass in der letzten Nachricht ein "Ende-Kennzeichner" enthalten ist. Das Kommunikationsmodul KM kann auch nach jeder Beanspruchungs-Nachricht einen Timeout-Zähler neu starten. Nach dessen Ablauf wird keine Beanspruchungs-Nachricht mehr erwartet, der aktuelle Ausscheidungsprozess ist mithin beendet.

Dann geht das Kommunikationsmodul KM in einem Übergang TR3 wieder in den Zustand AK über, was in Figur 9 dem Übergang vom Schritt S7 zum Schritt S1 entspricht. Im Schritt S1, der nunmehr dem Beginn des Ausscheidungszyklusses Z2 zugeordnet ist, ermittelt das Kommunikationsmodul KM wiederum den Entscheidungswert V1 des Segmentes SEC1 des Startidentifizierers SI1. Diesen versendet es im Schritt S2 an die Kommunikationseinrichtung K2. Von der Kommunikationseinrichtung K2 empfängt das Kommunikationsmodul KM deren Entscheidungswert V0. Im Schritt S3 ermittelt das Kommunikationsmodul KM, dass der eigene Entscheidungswert V1 höherwertiger ist als der empfangene Entscheidungswert V0 und geht, dargestellt durch einen Pfeil Y1 zu einem Schritt S4, in welchem es den Kommunikationsidentifizierer CI2 beansprucht und über das Netzwerk NET versendet.

Der Übergang vom Schritt S4 zum Ende END des Ablaufdiagramms entspricht in Figur 2 der Transition TR4 vom Zustand AK zum Zustand CL, den man auch als "Kommunikationsidentifizierer Beansprucht"-Zustand bezeichnen könnte. In diesem Zustand CL hat das Kommunikationsmodul KM alle erforderlichen Kommunikationsidentifizierer beansprucht. Es sendet keine weiteren Beanspruchungsnachrichten CL und verhält sich bei zukünftigen Ausscheidungsprozessen passiv. Allerdings empfängt es Beanspruchungsnachrichten CL mit Kommunikationsidentifizierern anderer Kommunikationseinrichtungen. Das Kommunikationsmodul KM verlässt den Zustand CL in einer Transition TR5, z.B. wenn es für eine vorbestimmte Zeit keine Nachrichten mit Entscheidungswerten und/oder keine Beanspruchungsnachrichten CL erhält. Die Kommunikationseinrichtungen K1 - K3 haben dann die Kommunikationsidentifizierer CI1, CI2, CI3 und CI4 erhalten, das Netzwerk NET ist mithin betriebsbereit.

Wenn eine Kommunikationseinrichtung neu mit dem Netzwerk NET verbunden wird, kann das obengenannte Verfahren erneut durchgeführt werden. Es ist auch möglich, dass die neu hinzukommende Kommunikationseinrichtung die übrigen Kommunikationseinrichtungen nach deren Kommunikationsidentifizierern fragt und/oder dass diese bei Empfang einer von der neu hinzukommenden Kommunikationseinrichtung gesendeten Nachricht SY von sich aus ihre Kommunikationsidentifizierer über das Netzwerk NET versenden.

Einer Kommunikationseinrichtung, die das erfindungsgemäße Verfahren nicht durchführen kann, kann einen Kommunikationsidentifizierer beispielsweise aus einem reservierten Adressraum erhalten. Die an dem erfindungsgemäßen Verfahren teilnehmenden Kommunikationseinrichtungen beanspruchen aus diesem Adressraum keinen Kommunikationsidentifizierer.

Bei einem CAN-Bus ist es erforderlich, dass für eine Nachricht eine Kommunikationseinrichtung die Funktion eines Empfängers erfüllt. Wenn nun alle Kommunikationseinrichtungen K1 - K3 möglichst gleichzeitig ihre Entscheidungswerte versenden wollen, ohne dass ein Empfänger vorhanden ist, kommt es zu einem Kollisionsproblem. Zur Lösung des Problems können eine oder mehrere Kommunikationseinrichtungen als Empfänger fungieren, z.B. die Kommunikationseinrichtung K1. Der erste Ausscheidungsprozess wird dann beispielsweise zunächst von den Kommunikationseinrichtungen K2 und K3 durchgeführt, der zweite Ausscheidungsprozess vom "Verlierer" des ersten Ausscheidungsprozesses und der Kommunikationseinrichtung K1.

**Patentansprüche**

1. Verfahren zur Ermittlung von Kommunikationsidentifizierern (CI1-CI4) für über ein Netzwerk (NET) verbundene Kommunikationseinrichtungen (K1-K4), denen Startidentifizierer (SI1-SI3) zugeordnet sind, bei dem jede Kommunikationseinrichtung (K1-K4) synchronisiert mit den jeweils anderen Kommunikationseinrichtungen (K1-K4) die folgenden Schritte ausführt:

a) Ermitteln eines ersten eigenen Entscheidungswerts (V0, V1; V0-V3) anhand des der Kommunikationseinrichtung (K1-K4) jeweils zugeordneten Startidentifizierers (SI1-SI3),
b) Versenden des eigenen Entscheidungswerts (V0, V1; V0-V3) über das Netzwerk (NET),
c) Vergleichen des eigenen Entscheidungswerts (V0, V1; V0-V3) mit empfangenen Entscheidungswerten (V0, V1; V0-V3), und
d) Beanspruchen zumindest eines Kommunikationsidentifizierers (CI1-CI4) und Übermitteln dieses mindestens einen Kommunikationsidentifizierers (CI1-CI4) über das Netzwerk (NET), wenn beim Schritt c) kein empfangener Entscheidungswert (V0, V1; V0-V3) verfügbar ist oder wenn im Schritt c) ermittelt wurde, dass nur ein Entscheidungswert (V0, V1; V0-V3) empfangen wurde und dass der jeweilige eigene Entscheidungswert (V0, V1; V0-V3) höherwertiger ist als dieser empfangene Entscheidungswert (V0, V1; V0-V3), wobei die jeweilige Kommunikationseinrichtung (K1-K4) die Schritte b) und c) nicht wiederholt, wenn sie im Schritt c) ermittelt, dass ihr aktueller eigener Entscheidungswert (V0, V1;V0-V3) niederwertiger ist als zumindest ein empfangener Entscheidungswert (V0, V1; V0-V3).

2.  Verfahren nach Anspruch 1, **dadurch gekennzeichnet, dass** es solange wiederholt wird, bis jede der Kommunikationseinrichtungen (K1-K4) zumindest einen Kommunikationsidentifizierer (CI1-CI4) beansprucht hat.

3.  Verfahren nach Anspruch 1 oder 2, **dadurch gekennzeichnet, dass** die den Kommunikationseinrichtungen (K1-K4) zugeordneten Startidentifizierer (SI1-SI3) voneinander verschieden sind.

4.  Verfahren nach einem der Ansprüche 1 bis 3, **dadurch gekennzeichnet, dass** es den folgenden Schritt e) enthält: Ermitteln zumindest eines zweiten Entscheidungswerts (V0, V1; V0-V3) anhand des der Kommunikationseinrichtung (K1-K4) jeweils zugeordneten Startidentifizierers (SI1-SI3) und Wiederholen der Schritte b) und c) anhand dieses mindestens einen zweiten Entscheidungswerts (V0, V1; V0-V3), wenn im Schritt c) ermittelt wird, dass der jeweilige eigene Entscheidungswert (V0, V1; V0-V3) gleichwertig ist wie zumindest ein empfangener Entscheidungswert (V0, V1; V0-V3) und dass kein empfangener Entscheidungswert (V0, V1; V0-V3) höherwertiger ist als der eigene Entscheidungswert (V0, V1; V0-V3).

5.  Verfahren nach Anspruch 4, **dadurch gekennzeichnet, dass** der jeweilige erste Entscheidungswert (V0, V1; V0-V3) anhand eines ersten Segmentes (SEC1) des jeweiligen Startidentifizierers (SI1-SI3) und der jeweils mindestens eine zweite Entscheidungswert (V0, V1; V0-V3) anhand mindestens eines zweiten Segmentes (SEC2) des jeweiligen Startidentifizierers (SI1-SI3) ermittelt wird.

6.  Verfahren nach Anspruch 4 oder 5, **dadurch gekennzeichnet, dass** das erste und das mindestens eine zweite Segment (SEC1, SEC2) aus benachbarten Abschnitten des jeweiligen Startidentifizierers (SI1-SI3) gebildet werden.

7.  Verfahren nach einem der Ansprüche 4 bis 6, **dadurch gekennzeichnet, dass** die Schritte a), b) und c) oder b), c) und e) innerhalb eines vordefinierten Zeittaktes (T11, T12, T1N) durchgeführt werden.

8.  Verfahren nach Anspruch 7, **dadurch gekennzeichnet, dass** jede Kommunikationseinrichtung (K1-K4) innerhalb eines Zeittaktes (T11, T12, T1N) nur jeweils einen Entscheidungswert (V0, V1; V0-V3) versendet.

9.  Verfahren nach einem der Ansprüche 4 bis 8, **dadurch gekennzeichnet, dass** für jeden Startidentifizierer (SI1-SI3) eine vorbestimmte Anzahl von Segmenten (SEC1, SEC2) vorgesehen ist, und dass eine Kommunikationseinrichtung (K1-K4), für die beim Schritt c) kein empfangener Entscheidungswert (V0, V1; V0-V3) verfügbar ist oder nur ein einziger empfangener Entscheidungswert (V0, V1; V0-V3) verfügbar ist, der niederwertiger ist als der jeweilige eigene Entscheidungswert (V0, V1; V0-V3), anhand bis dahin noch nicht ausgewerteter Segmente der vorbestimmten Anzahl von Segmenten (SEC1, SEC2) einen Entscheidungswert bildet und über das Netzwerk (NET) versendet.

10. Verfahren nach einem der vorhergehenden Ansprüche, **dadurch gekennzeichnet, dass** eine Kommunikationseinrichtung (K1-K4) die Schritte b) und c) nicht wiederholt und aus dem Verfahren ausscheidet, wenn sie im Schritt c) ermittelt, dass ihr aktueller eigener Entscheidungswert (V0, V1; V0-V3) niederwertiger ist als zumindest ein empfangener Entscheidungswert (V0, V1; V0-V3).

11. Verfahren nach einem der vorhergehenden Ansprüche, **dadurch gekennzeichnet, dass** es die Kommunikationseinrichtungen (K1-K4) nach dem definierten Abschluss einer Anlaufphase durchführen.

12. Verfahren nach Anspruch 11, **dadurch gekennzeichnet, dass** jede Kommunikationseinrichtung (K1-K4) den jeweils anderen Kommunikationseinrichtungen (K1-K4) den Abschluss ihrer Anlaufphase mit einer Synchronisierungsnachricht (SY) mitteilt.

13. Verfahren nach Anspruch 12, **dadurch gekennzeichnet, dass** jede Kommunikationseinrichtung (K1-K4) nach Abschluss ihrer Anlaufphase eine vorbestimmte Wartezeit bis zur Durchführung des Schrittes a) wartet, wobei sie mit der Wartezeit bei Empfang einer Synchronisierungsnachricht (SY) erneut beginnt.

14. Verfahren nach einem der vorhergehenden Ansprüche, **dadurch gekennzeichnet, dass** als das Netzwerk (NET) ein Bussystem, insbesondere ein Controller-Area-Network-Bussystem, verwendet wird.

15. Verfahren nach einem der vorhergehenden Ansprüche, **dadurch gekennzeichnet, dass** es erneut durchgeführt wird, wenn eine Kommunikationseinrichtung (K1-K4) neu mit dem Netzwerk (NET) verbunden wird.

16. Verfahren nach einem der vorhergehenden Ansprüche, **dadurch gekennzeichnet, dass** zumindest ein Kommunikationsidentifizierer (CI1-CI4) für eine nicht an dem Verfahren teilnehmende Kommunikationseinrichtung reserviert und nicht durch die an dem Verfahren teilnehmenden Kommunikationseinrichtungen (K1-K3) beanspruchbar ist.

17. Kommunikationseinrichtung zur Ermittlung von Kommunikationsidentifizierern (CI1-CI4), die über ein Netzwerk (NET) mit mindestens einer weiteren Kommunikationseinrichtung (K2-K3) verbindbar ist, wobei den Kommunikationseinrichtungen (K1-K3) jeweils Startidentifizierer (SI1-SI3) zugeordnet sind, mit Mitteln zur synchronen Ausführung der folgenden Schritte, wenn die Kommunikationseinrichtung (K1-K4) mit der mindestens einen weiteren Kommunikationseinrichtung (K1-K4) über das Netzwerk (NET) verbunden ist:

   a) Ermitteln eines ersten eigenen Entscheidungswerts (V0, V1; V0-V3) anhand des der Kommunikationseinrichtung (K1) zugeordneten Startidentifizierers (SI1),
   b) Versenden des jeweiligen eigenen Entscheidungswerts (V0, V1; V0-V3) über das Netzwerk (NET),
   c) Vergleichen des jeweiligen eigenen Entscheidungswerts (V0, V1; V0-V3) mit empfangenen Entscheidungswerten (V0, V1; V0-V3), und

   d) Beanspruchen zumindest eines Kommunikationsidentifizierers (CI1) und Übermitteln dieses mindestens einen Kommunikationsidentifizierers (CI1) über das Netzwerk (NET), wenn beim Schritt c) kein empfangener Entscheidungswert (V0, V1; V0-V3) verfügbar ist oder wenn im Schritt c) ermittelt wurde, dass nur ein Entscheidungswert (V0, V1; V0-V3) empfangen wurde und dass der jeweilige eigene Entscheidungswert (V0, V1; V0-V3) höherwertiger ist als dieser empfangene Entscheidungswert (V0, V1;V0-V3), wobei die jeweilige Kommunikationseinrichtung (K1-K4) die Schritte b) und c) nicht wiederholt, wenn sie im Schritt c) ermittelt, dass ihr aktueller eigener Entscheidungswert (V0, V1; V0-V3) niederwertiger ist als zumindest ein empfangener Entscheidungswert (V0, V1; V0-V3).

18. Kommunikationseinrichtung (K1) nach Anspruch 17, **dadurch gekennzeichnet, dass** sie Mittel zur Ausführung des folgenden Schritts e) enthält: Ermitteln zumindest eines zweiten Entscheidungswerts (V0, V1; V0-V3) anhand des der Kommunikationseinrichtung (K1) jeweils zugeordneten Startidentifizierers (SI1) und Wiederholen der Schritte b) und c) anhand dieses mindestens einen zweiten Entscheidungswerts (V0, V1; V0-V3), wenn im Schritt c) ermittelt wird, dass der jeweilige eigene Entscheidungswert (V0, V1; V0-V3) gleichwertig ist wie zumindest ein empfangener Entscheidungswert (V0, V1; V0-V3) und dass kein empfangener Entscheidungswert (V0, V1; V0-V3) höherwertiger ist als der eigene Entscheidungswert (V0, V1; V0-V3).

19. Kommunikationsmodul für eine Kommunikationseinrichtung (K1)nach Anspruch 17 zur Ermittlung von Kommunikationsidentifizierern (CI1-CI4), Wobei das Kommunikationsmodul (KM) Programmcode enthält, welche Programmcode beim Betrieb auf einem Steuermittel (CPU) der Kommunikationseinrichtung (K1), die Kommunikationseinrichtung (K1) veranlasst, synchronisiert mit den jeweils anderen Kommunikationseinrichtungen (K2-K4), die in Anspruch 17 definierten Schritte auszuführen, wenn sie mit der mindestens einen weiteren Kommunikationseinrichtung (K1-K4) über das Netzwerk (NET) verbunden ist.

20. Kommunikationsmodul nach Anspruch 19, **dadurch gekennzeichnet, dass** die Kommunikationsmodul weitere Programmcode enthält, die die Kommunikationseinrichtung (K1) bei der Ausführung des Programmcodes veranlasst, den folgenden Schritt e) auszuführer: Ermitteln zumindest eines zweiten Entscheidungswerts (V0, V1; V0-V3) anhand des der Kommunikationseinrichtung (K1-K4) jeweils zugeordneten Startidentifizierers (SI1) und Wiederholen der Schritte b) und c) anhand dieses mindestens einen zweiten Entscheidungswerts (V0, V1; V0-V3), wenn im Schritt c) ermittelt wird, dass der jeweilige eigene Entscheidungswert (V0, V1; V0-V3) gleichwertig ist wie zumindest ein empfangener Entscheidungswert (V0, V1; V0-V3) und dass kein empfangener Entscheidungswert (V0, V1; V0-V3) höherwertiger ist als der eigene Entscheidungswert (V0, V1; V0-V3).

21. Speichermittel mit einem darauf gespeicherten Kommunikationsmodul nach Anspruch 19 oder 20.

**Claims**

1. Method for the determination of communication identifiers (CI1-CI4) for communication devices (K1-K4) connected via a network (NET), to which start identifiers (SI1-SI3) are assigned, wherein each communication device (K1-K4) executes the following steps synchronously with the other communication devices (K1-K4):

   a) determination of a first own decision value (V0, V1; V0-V3) with reference to the start identifier (SI1-SI3) assigned to the relevant communication device (K1-K4),
   b) transmission of the own decision value (V0, V1; V0-V3) via the network (NET),
   c) comparison of the own decision value (V0, V1; V0-V3) to received decision values (V0, V1; V0-V3), and
   d) claiming at least one communication identifier (CI1-CI4) and transmission of said at least one communication identifier (CI1-CI4) via the network (NET), if no received decision value (V0, V1; V0-V3) is available in step c) or if it was found in step c) that only one decision value (V0, V1; V0-V3) has been received and that the own decision value (V0, V1; V0-V3) is of a higher order than said received decision value (V0, V1; V0-V3), wherein the relevant communication device (K1-K4) does not repeat steps b) and c) if it finds in step c) that its current own decision value (V0, V1; V0-V3) is of a lower order than at least one received decision value (V0, V1; V0-V3).

2. Method according to claim 1, **characterised in that** it is repeated until each of the communication devices (K1-K4) has claimed at least one communication identifier (CI1-CI4).

3. Method according to claim 1 or 2, **characterised in**

**that** the start identifiers (SI1-SI3) assigned to the communication devices (K1-K4) differ from one another.

4. Method according to any of claims 1 to 3, **characterised in that** it includes the following step e): determination of at least one second decision value (V0, V1; V0-V3) with reference to the start identifier (SI1-SI3) assigned to the relevant communication device (K1-K4) and repetition of steps b) and c) with reference to said at least one second decision value (V0, V1; V0-V3), if it is found in step c) that the relevant own decision value (V0, V1; V0-V3) is equivalent to at least one received decision value (V0, V1; V0-V3) and that no received decision value (V0, V1; V0-V3) is of a higher order than the own decision value (V0, V1; V0-V3).

5. Method according to claim 4, **characterised in that** the relevant first decision value (V0, V1; V0-V3) is determined with reference to a first segment (SEC1) of the relevant start identifier (SI1-SI3) and the at least one second decision value (V0, V1; V0-V3) is determined with reference to at least one second segment (SEC2) of the relevant start identifier (SI1-SI3).

6. Method according to claim 4 or 5, **characterised in that** the first segment and the at least one second segment (SEC1, SEC2) are represented by adjacent sections of the relevant start identifier (SI1-SI3).

7. Method according to any of claims 4 to 6, **characterised in that** steps a), b) and c) or b), c) and e) respectively are executed within a predefined time cycle (T11, T12, T1N).

8. Method according to claim 7, **characterised in that** each communication device (K1-K4) transmits only one decision value (V0, V1; V0-V3) within any time cycle (T11, T12, T1N).

9. Method according to any of claims 4 to 8, **characterised in that** a predefined number of segments (SEC1, SEC2) is provided for each start identifier (SI1-SI3), and **in that** a communication device (K1-K4) for which no received decision value (V0, V1; V0-V3) is available in step c) or for which only a single received decision value (V0, V1; V0-V3) of a lower order than the relevant own decision value (V0, V1; V0-V3) is available forms a decision value with reference to not yet evaluated segments of the predefined number of segments (SEC1, SEC2) and transmits it via the network (NET).

10. Method according to any of the preceding claims, **characterised in that** a communication device (K1-K4) does not repeat steps b) and c) and is eliminated from the method if it finds in step c) that its current own decision value (V0, V1; V0-V3) is of a lower order than at least one received decision value (V0, V1; V0-V3).

11. Method according to any of the preceding claims, **characterised in that** it is implemented by the communication devices (K1-K4) following the defined completion of a start phase.

12. Method according to claim 11, **characterised in that** each communication device (K1-K4) informs the other communication devices (K1-K4) of the completion of its start phase by means of a synchronisation message (SY).

13. Method according to claim 12, **characterised in that** each communication device (K1-K4), on completion of its start phase, waits for a predefined waiting time before executing step a), said waiting time beginning again on receipt of a synchronisation message (SY).

14. Method according to any of the preceding claims, **characterised in that** a bus system, in particular a controller area network bus system, is used as a network (NET).

15. Method according to any of the preceding claims, **characterised in that** it is executed whenever a communication device (K1-K4) is newly connected to the network (NET).

16. Method according to any of the preceding claims, **characterised in that** at least one communication identifier (CI1-CI4) is reserved for a communication device not participating in the method and cannot be claimed by the communication devices (K1-K3) participating in the method.

17. Communication device for the determination of communication identifiers (CI1-CI4), which is connectable to at least one further communication device (K2-K3) via a network (NET), wherein start identifiers (SI1-SI3) are assigned to the communication devices (K1-K3), with means for the synchronous execution of the following steps if the communication device (K1-K4) is connected to the at least one further communication device (K1-K4) via the network (NET):

a) determination of a first own decision value (V0, V1; V0-V3) with reference to the start identifier (SI1) assigned to the communication device (K1),
b) transmission of the own decision value (V0, V1; V0-V3) via the network (NET),

c) comparison of the own decision value (V0, V1; V0-V3) to received decision values (V0, V1; V0-V3), and
d) claiming at least one communication identifier (CI1) and transmission of said at least one communication identifier (CI1) via the network (NET), if no received decision value (V0, V1; V0-V3) is available in step c) or if it was found in step c) that only one decision value (V0, V1; V0-V3) has been received and that the own decision value (V0, V1; V0-V3) is of a higher order than said received decision value (V0, V1; V0-V3), wherein the relevant communication device (K1-K4) does not repeat steps b) and c) if it finds in step c) that its current own decision value (V0, V1; V0-V3) is of a lower order than at least one received decision value (V0, V1; V0-V3).

18. Communication device (K1) according to claim 17, **characterised in that** it includes means for the execution of the following step e): determination of at least one second decision value (V0, V1; V0-V3) with reference to the start identifier (SI1) assigned to the communication device (K1) and repetition of steps b) and c) with reference to said at least one second decision value (V0, V1; V0-V3), if it is found in step c) that the relevant own decision value (V0, V1; V0-V3) is equivalent to at least one received decision value (V0, V1; V0-V3) and that no received decision value (V0, V1; V0-V3) is of a higher order than the own decision value (V0, V1; V0-V3).

19. Communication module for a communication device (K1) according to claim 17 for the determination of communication identifiers (CI1-CI4), wherein the communication module (KM) contains a programme code which causes, when being run on a control unit (CPU) of the communication device (K1), said communication device (K1) to execute the steps defined in claim 17 synchronously with the other communication devices (K2-K4) if it is connected to the at least one further communication device (K1-K4) via the network (NET).

20. Communication module according to claim 19, **characterised in that** the communication module (KM) contains a further programme code which causes, when being executed, the communication device (K1) to execute the following step e): determination of at least one second decision value (V0, V1; V0-V3) with reference to the start identifier (SI1) assigned to the relevant communication device (K1-K4) and repetition of steps b) and c) with reference to said at least one second decision value (V0, V1; V0-V3), if it is found in step c) that the relevant own decision value (V0, V1; V0-V3) is equivalent to at least one received decision value (V0, V1; V0-V3) and that no received decision value (V0, V1; V0-V3) is of a higher order than the own decision value (V0, V1; V0-V3).

21. Storage medium with a communication module according to claim 19 or 20 stored thereon.

## Revendications

1. Procédé de détermination d'identificateurs de communication (CI1-CI4) pour des dispositifs de communication (K1-K4) reliés par un réseau (NET) auxquels sont associés des identificateurs de lancement (SI1-SI3), dans lequel chaque dispositif de communication (K1-K4) exécute, de manière synchronisée avec les autres dispositifs de communication (K1-K4), les étapes suivantes :

   a) détermination d'une première valeur de décision (V0, V1 ; V0-V3) qui lui est propre à l'aide de l'identificateur de lancement (SI1-SI3) associé au dispositif de communication (K1-K4) respectif,
   b) envoi de la valeur de décision (V0, V1 ; V0-V3) qui lui est propre par le réseau (NET),
   c) comparaison de la valeur de décision (V0, V1 ; V0-V3) qui lui est propre à des valeurs de décision (V0, V1 ; V0-V3) reçues, et
   d) recours à au moins un identificateur de communication (CI1-CI4) et transmission de ce au moins un identificateur de communication (CI1-CI4) par le réseau (NET), si au cours de l'étape c) aucune valeur de décision (V0, V1 ; V0-V3) reçue n'est disponible ou si au cours de l'étape c) il a été déterminé qu'une seule valeur de décision (V0, V1 ; V0-V3) a été reçue et que la propre valeur de décision (V0, V1 ; V0-V3) respective est supérieure à cette valeur de décision reçue (V0, V1 ; V0-V3) le dispositif de communication (K1-K4) respectif ne répétant pas les étapes b) et c) si au cours de l'étape c) il a été déterminé que sa valeur de décision propre (V0, V1 ; V0-V3) actuelle est inférieure à au moins une valeur de décision reçue (V0, V1 ; V0-V3).

2. Procédé selon la revendication 1, **caractérisé en ce qu'**il est répété jusqu'à ce que chacun des dispositifs de communication (K1-K4) a recouru à au moins un identificateur de communication (CI1-CI4).

3. Procédé selon la revendication 1 ou 2, **caractérisé en ce que** les identificateurs de lancement (SI1-SI3), associés aux dispositifs de communication (K1-K4), sont différents les uns des autres.

4. Procédé selon l'une des revendications 1 à 3, **caractérisé en ce qu'**il contient l'étape e) suivante : détermination d'au moins une deuxième valeur de décision (V0, V1 ; V0-V3) à l'aide de l'identificateur de lancement (SI1-SI3) associé au dispositif de communication (K1-K4) respectif, et répétition des étapes b) et c) à l'aide de cette au moins une deuxième valeur de décision (V0, V1 ; V0-V3), si au cours de l'étape c) il a été déterminé que la valeur de décision propre (V0 V1 ; V0-V3) respective est équivalente à au moins une valeur de décision reçue (V0, V1 ; V0-V3) et qu'aucune valeur de décision reçue (V0, V1 ; V0-V3) n'est supérieure à la propre valeur de décision (V0, V1 ; V0-V3).

5. Procédé selon la revendication 4, **caractérisé en ce que** la première valeur de décision (V0, V1 ; V0-V3) respective est déterminée à l'aide d'un premier segment (SEC1) de l'identificateur de lancement (SI1-SI3) respectif et la au moins une deuxième valeur de décision (V0, V1 ; V0-V3) respective est déterminée à l'aide d'au moins un deuxième segment (SEC2) de l'identificateur de lancement (SCI1-SCI3) respectif.

6. Procédé selon la revendication 4 ou 5, **caractérisé en ce que** le premier et le au moins un deuxième segment (SEC1, SEC2) sont formés par des parties voisines de l'identificateur de lancement (SI1-SI3) respectif.

7. Procédé selon l'une des revendications 4 à 6, **caractérisé en ce que** les étapes a), b) et c) ou b), c) et e) sont exécutées à l'intérieur d'une séquence de temps (T11, T12, T1 N) prédéfinie.

8. Procédé selon la revendication 7, **caractérisé en ce que** chaque dispositif de communication (K1-K4) n'envoie qu'une valeur de décision (V0, V1 ; V0-V3) à l'intérieur d'une séquence de temps (T11, T12, T1N).

9. Procédé selon l'une des revendications 4 à 8, **caractérisé en ce que** pour chaque identificateur de lancement (SI1-SI3) il est prévu un nombre prédéterminé de segments (SEC1, SEC2), et **en ce qu'**un dispositif de communication (K1-K4), pour lequel au cours de l'étape c) aucune valeur de décision reçue (V0, V1 ; V0-V3) n'est disponible, ou seulement une seule valeur de décision reçue (V0, V1 ; V0-V3) est disponible, qui est inférieure à la propre valeur de décision (V0, V1 ; V0-V3) respective, forme, à l'aide de segments non encore exploités jusque là du nombre prédéterminé de segments (SEC1, SEC2), une valeur de décision et l'envoie par le réseau (NET).

10. Procédé selon l'une des revendications précédentes, **caractérisé en ce qu'**un dispositif de communication (K1-K4) ne répète pas les étapes b) et c) et les élimine du procédé, s'il détermine au cours de l'étape c) que sa propre valeur de décision actuelle (V0, V1 ; V0-V3) est inférieure à au moins une valeur de décision reçue (V0, V1 ; V0-V3).

11. Procédé selon l'une des revendications précédentes, **caractérisé en ce qu'**il est mis en oeuvre par les dispositifs de communication (K1-K4) après l'achèvement défini d'une phase de lancement.

12. Procédé selon la revendication 11, **caractérisé en ce que** chaque dispositif de communication (K1-K4) communique aux autres dispositifs de communication (K1-K4) l'achèvement de sa phase de lancement avec une information de synchronisation (SY).

13. Procédé selon la revendication 12, **caractérisé en ce que** chaque dispositif de communication (K1-K4), à l'achèvement de sa phase de lancement, attend pendant un temps d'attente prédéterminé jusqu'à l'exécution de l'étape a), et recommence avec le temps d'attente lorsqu'est reçue une information de synchronisation (SY).

14. Procédé selon l'une des revendications précédentes, **caractérisé en ce qu'**on utilise comme réseau (NET) un système de bus, en particulier un système de bus Controller-Area-Network.

15. Procédé selon l'une des revendications précédentes, **caractérisé en ce qu'**il est exécuté à nouveau lorsqu'un dispositif de communication (K1-K4) est relié à nouveau au réseau (NET).

16. Procédé selon l'une des revendications précédentes, **caractérisé en ce qu'**au moins un identificateur de communication (CI1-CI4) est réservé pour un dispositif de communication ne participant pas au procédé, et ne peut être utilisé par les dispositifs de communication (K1-K3) participant au procédé.

17. Dispositif de communication pour la détermination d'identificateurs de communication (CI1-CI4) qui peut être relié par un réseau (NET) à au moins un autre dispositif de communication (K2-K3), à chacun des dispositifs de communication (K1-K3) étant associé un identificateur de lancement (SI1-SI3), comportant des moyens pour l'exécution synchrone des étapes suivantes, lorsque le dispositif de communication (K1-K4) est relié par le réseau (NET) à au moins un autre dispositif de communication (K1-K4) :

   a) détermination d'une première valeur de décision (V0 V1 ; V0-V3) qui lui est propre à l'aide de l'identificateur de lancement (SI1-SI3) associé au dispositif de communication (K1-K4) respectif,
   b) envoi de la valeur respective de décision respective (V0, V1 ; V0-V3) qui lui est propre par le réseau (NET),
   c) comparaison de la valeur de décision respective (V0, V1 ; V0-V3) qui lui est propre à des valeurs de décision (V0, V1 ; V0-V3) reçues, et
   d) recours à au moins un identificateur de communication (CI1-CI4) et transmission de ce au moins un identificateur de communication (CI1-CI4) par le réseau (NET), si au cours de l'étape c) aucune valeur de décision (V0, V1 ; V0-V3) reçue n'est disponible ou si au cours de l'étape c) il a été déterminé qu'une seule valeur de décision (V0, V1 ; V0-V3) a été reçue et que la propre valeur de décision (V0, V1 ; V0-V3) respective est supérieure à cette valeur de décision reçue (V0, V1 ; V0-V3), le dispositif de communication (K1-K4) respectif ne répétant pas les étapes b) et c) si au cours de l'étape c) il a été déterminé que sa valeur de décision propre (V0, V1 ; V0-V3) actuelle est inférieure à au moins une valeur de décision reçue (V0, V1 ; V0-V3).

18. Dispositif de communication (K1) selon la revendication 17, **caractérisé en ce qu'**il contient des moyens pour exécuter l'étape e) suivante : détermination d'au moins une deuxième valeur de décision (V0, V1 ; V0-V3) à l'aide de l'identificateur de lancement (SI1-SI3) associé au dispositif de communication (K1-K4) respectif, et répétition des étapes b) et c) à l'aide de cette au moins une deuxième valeur de décision (V0, V1 ; V0-V3), si au cours de l'étape c) il a été déterminé que la valeur de décision propre (V0, V1 ; V0-V3) respective est équivalente à au moins une valeur de décision reçue (V0, V1 ; V0-V3) et qu'aucune valeur de décision reçue (V0, V1 ; V0-V3) n'est supérieure à la propre valeur de décision (V0, V1 ; V0-V3).

19. Module de communication pour un dispositif de communication (K1) selon la revendication (17) pour déterminer des identificateurs de communication (CI1-CI4), le module de communication (KM) contenant un code de programme qui, pendant le fonctionnement sur un moyen de commande (CPU) du dispositif de communication (K1), incite le dispositif de communication (K1) à exécuter les étapes définies dans la revendication 17, de manière synchronisée avec les autres dispositifs de communication (K2-K4), lorsqu'il est relié par le réseau (NET) à le au moins un autre dispositif de communication (K 1-K4).

20. Module de communication selon la revendication 19, **caractérisé en ce que** le module de communication (KM) contient un autre code de programme qui incite le dispositif de communication (K1), lors de l'exécution du code de programme, à exécuter l'étape e) suivante : détermination d'au moins une deuxième valeur de décision (V0, V1 ; V0-V3) à l'aide de l'identificateur de lancement (SI1-SI3) associé au dispositif de communication (K1-K4) respectif, et répétition des étapes b) et c) à l'aide de cette au moins une deuxième valeur de décision (V0, V1 ; V0-V3), si au cours de l'étape c) il a été déterminé que la valeur de décision propre (V0, V1 ; V0-V3) respective est équivalente à au moins une valeur de décision reçue (V0, V1 ; V0-V3) et qu'aucune valeur de décision reçue (V0, V1 ; V0-V3) n'est supérieure à la propre valeur de décision (V0, V1 ; V0-V3).

21. Moyen de mémorisation avec un module de communication mémorisé sur celui-ci selon la revendication 19 ou 20.

**Fig. 1**

**Fig. 2**

|     | SI          | SEC32 - SEC4 | SEC3 | SEC2 | SEC1 |
|-----|-------------|--------------|------|------|------|
| K1  | 0x12345671  |              | V0   | V0   | V1   |
| K2  | 0x12345672  |              | V0   | V1   | V0   |
| K3  | 0x12345673  |              | V0   | V1   | V1   |

## Fig. 3

## Fig. 4B

Fig. 4A

|      | SI          | SEC16 - SEC3 | SEC2 | SEC1 |
|------|-------------|--------------|------|------|
| K1   | 0x12345671  |              | V0   | V1   |
| K2   | 0x12345672  |              | V0   | V2   |
| K3   | 0x12345673  |              | V0   | V3   |

## Fig. 5

## Fig. 6

**Fig. 7**

**Fig. 8**

**Fig. 9**